# EUROPEAN PATENT APPLICATION

(11) **EP 0 927 675 A1**
(43) Date of publication of application: **07.07.1999**
(21) Application number: 98106281.3
(22) Date of filing: 06.04.1998
(51) Int. Cl.: B62B 1/12

(54) **Carryall cart**

(30) Priority: 31.12.1997 IT PD970097
(71) Applicant: GIMI S.r.l., I-35043 Monselice Padova (IT)
(72) Inventor: Maggioni, Marco, 20059 Vimercate, (Milano) (IT)
(74) Representative: Modiano, Guido, Dr.-Ing.

(57) **Abstract**

A carryall cart comprising a supporting base (10) made of tubular elements (11) which are arranged in a bridge-like configuration between two supports (12) for an axle (13) of a pair of wheels (14) and a stand (15) which is substantially parallel thereto. The ends (21) of an inverted U-shaped tubular handle (22) are rotatably coupled to the wheel axle (13) and the rotation of the handle (22) is locked in the active position, at right angles to the base (10), by reversible-coupling seats (24) for parts of the handle, which are provided in the axle supports (12).

## Description

The present invention relates to a carryall cart.

Conventional carryall carts are constituted by a rigid frame on which a container is rested and fixed. These carts suffer the drawback that they are not easy to store due to their overall dimensions.

The aim of the present invention is to provide a carryall cart which, when not in use, can assume a highly compact folded configuration.

Within the scope of this aim, a consequent primary object of the present invention is to provide a cart which allows simple and quick assembly.

Another important object of the present invention is to provide a cart whose structure comprises elements which meet in common load-bearing supports.

Another object of the present invention is to provide a cart which can be marketed at a competitive price.

This aim, these objects and others which will become apparent hereinafter are achieved by a carryall cart, characterized in that it comprises a supporting base made of tubular elements which are arranged in a bridge-like configuration between two supports for an axle of a pair of wheels and a stand which is substantially parallel thereto, the ends of an inverted U-shaped tubular handle being rotatably coupled to said axle, the rotation of said handle being locked in the active position, at right angles to said base, by reversible-coupling seats for parts of said handle, which are provided in said supports.

Further characteristics and advantages of the cart according to the present invention will become apparent from the following detailed description of an embodiment thereof, illustrated only by way of non-limitative example in the accompanying drawings, wherein:
Figure 1 is a perspective view of the cart with a carryall container;
Figure 2 is a perspective view of the cart, showing the container and its minimum-bulk arrangement in broken lines;
Figure 3 is an enlarged-scale perspective view of a detail of a support for the wheel axle;
Figure 4 is an exploded perspective view of the cart of Figure 1.

With reference to the above figures, a carryall cart according to the invention comprises a supporting base 10 constituted by two tubular metallic elements 11 which are shaped like an inverted U and are arranged in a bridge-like configuration between two supports 12, made of molded plastics, for an axle 13 of a pair of wheels 14, and a stand 15, also made of molded plastics, which is substantially parallel thereto.

In particular, each one of the supports 12, which are substantially shaped like a rounded parallelepipedal block, is longitudinally provided with a hole 16 for the insertion of a corresponding first end 17 of the corresponding tubular element 11, while the stand 15, which is substantially cradle-shaped, is provided at its ends with holes 18 for corresponding second ends 19 of each element 11.

The first ends 17 of each element 11 are diametrically crossed by holes 20 for the passage of the axle 13 of the wheels 14.

Also the supports 12 are crossed by holes 12a for the passage of the axle 13.

According to the invention, the ends 21 of an inverted U-shaped metallic tubular handle 22 are rotatably coupled to the axle 13 of the wheels 14, in an internal position with respect to the first ends 17 of the tubular metallic elements 11; the ends 21, which are crossed for this purpose, in diametrical holes 23, by the axle 13, can be arranged in complementarily shaped seats 24 of each support 12.

The seats 24 are open in order to allow the free rotation of the handle 22 towards the stand 15.

Flanges 25, constituted by elastic tabs, define reversible coupling elements for the handle 22, partially closing the seats 24.

Reversibility is caused by the elastic characteristic of the flanges 25 which, by being monolithic with the supports 12, are made of plastics.

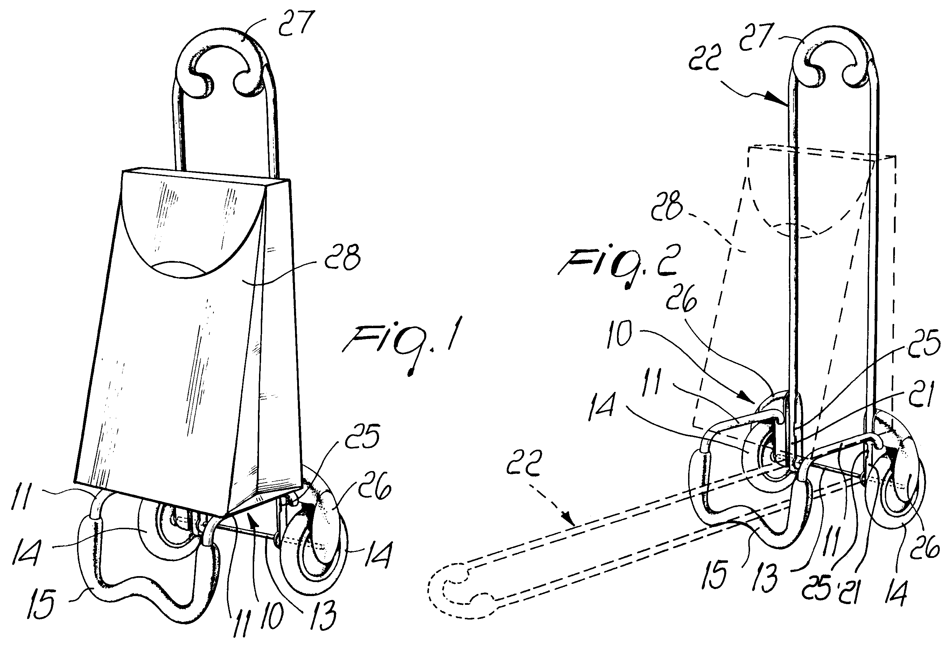

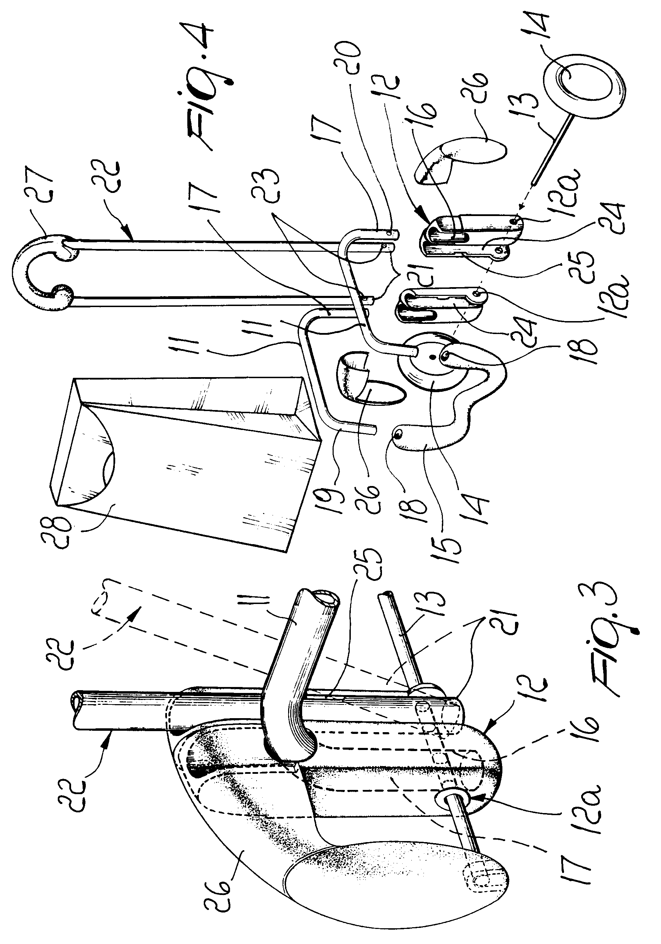

Covering elements 26, made of molded plastics, are arranged so as to cover, by coupling with a snap fit, the upper ends of the holes 16 and the corresponding ends of the axle 13, as shown in particular in Figure 3, to the side of each wheel 14.

A handgrip 27, also made of molded plastics, is arranged with a snap fit so as to cover the curved upper end of the handle 22.

A container 28 can be conveniently rested on the base 10 and fixed to the handle 22, for example by means of laces or Velcro, not shown in the figures.

The container 28 can be made of rigid or soft material.

In practice, it has been observed that the intended aim and objects of the present invention have been achieved.

The entire structure of the cart in fact converges on two supports 12, which are thus load-bearing elements.

Moreover, the handle 22 can rotate so that the cart assumes a minimum-bulk inactive position.

The structure is composed of elements which can be easily mutually assembled by snap fit.

In practice, the materials employed, so long as they are compatible with the contingent use, as well as the dimensions, may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A carryall cart, characterized in that it comprises a supporting base made of tubular elements which are arranged in a bridge-like configuration between two supports for an axle of a pair of wheels and a stand which is substantially parallel thereto, the ends of an inverted U-shaped tubular handle being rotatably coupled to said axle, the rotation of said handle being locked in the active position, at right angles to said base, by reversible-coupling seats for parts of said handle, which are provided in said supports.

2. A carryall cart according to claim 1, characterized in that a container is placed on said base and is fixed to the handle by means of laces, Velcro or the like.

3. A cart according to claim 1, characterized in that said tubular element comprises two inverted U-shaped tubular elements arranged in a bridge-like configuration, said U-shaped tubular elements being inserted, by means of their ends, in corresponding holes of said supports for the axle of the pair of wheels and of said stand.

4. A cart according to claim 1, characterized in that each one of said supports for the axle of the pair of wheels is constituted by a block made of molded plastics which is substantially shaped like a parallelepiped and in which the corresponding hole of the tubular element that converges to form said base is arranged longitudinally, said block being also provided with a hole for the passage of said wheel axle.

5. A cart according to claim 1, characterized in that said stand is constituted by a cradle-shaped element made of molded plastics, at the end whereof corresponding holes for corresponding ends of said bridge-like tubular elements of said base are provided.

6. A cart according to claim 5, characterized in that said ends of said tubular elements arranged in a bridge-like configuration that are inserted in said wheel axle supports are crossed by said axle in corresponding diametrical holes.

7. A cart according to claim 1, characterized in that said wheel axle supports are longitudinally provided with said seats for the ends of said tubular handle, said seats being open to allow rotation, the reversible coupling being provided by wing-shaped flanges that partially close said seats.

8. A cart according to claim 7, characterized in that said ends of said tubular handle are crossed in corresponding diametrical holes by said wheel axle.

9. A cart according to claim 8, characterized in that covering elements cover, with a snap fit, the ends of said holes for the ends of said base elements inserted in said supports for the wheel axle and for the ends of said axle.

10. A cart according to claim 1, characterized in that a handgrip made of molded plastics covers, with a snap fit, the curved end of said handle.
